# EUROPÄISCHE PATENTSCHRIFT

(11) **EP 4 002 957 B1**
(45) Veröffentlichungstag und Bekanntmachung des Hinweises auf die Patenterteilung: **09.08.2023**
(21) Anmeldenummer: 20209256.5
(22) Anmeldetag: 23.11.2020
(51) Int. Cl.: H05B 45/20, A01K 29/00

(54) **LEUCHTE FÜR ZUCHTANLAGEN**
LIGHT FOR LIVESTOCK REARING SYSTEMS
LUMINAIRE POUR INSTALLATIONS D'ÉLEVAGE

(43) Veröffentlichungstag der Anmeldung: 25.05.2022
(60) Teilanmeldung: 22216486.5
(73) Patentinhaber: PACELUM GmbH, 50829 Köln (DE)
(72) Erfinder: Kwetkat, Stefan, 46487 Wesel (DE); Neu, Volker, 50733 Köln (DE)
(74) Vertreter: Lippert Stachow Patentanwälte Rechtsanwälte

(56) Entgegenhaltungen:
- DE-U1-202005 001 540
- US-A1- 2017 290 124

## Beschreibung

Die Erfindung betrifft eine Leuchte zur Beleuchtung von Zuchtanlagen sowie ein Verfahren zur Beleuchtung von Zuchtanlagen.

Bekanntermaßen ist es für Zuchtanlagen vorteilhaft, eine Beleuchtung mit einer Abstrahlcharakteristik, d. h. Verteilung der Intensität über die Wellenlänge, vorzusehen, die auf die in der jeweiligen Zuchtanlage zu züchtenden Lebewesen besonders angepasst ist. Im Stand der Technik hat sich herausgestellt, dass hierzu die Verwendung von Leuchten besonders vorteilhaft ist, die eine Vielzahl an unterschiedlichen Lichtquellen, insbesondere LEDs, aufweisen, die jeweils eine andere Abstrahlcharakteristik aufweisen, d. h. eine andere Verteilung der von ihnen während ihres jeweiligen Betriebs ausgesandten Intensität, dass heißt Lichtintensität, in Abhängigkeit von der Wellenlänge. Durch das Vorsehen einer Vielzahl an solchen sich in ihrer Abstrahlcharakteristik unterscheidenden Lichtquellen kann gezielt eine Leuchte mit einer Leuchtenabstrahlcharakteristik realisiert werden, die den Bedürfnissen der zu züchtenden Lebewesen besonders nachkommt. Dabei ergibt sich die Leuchtenabstrahlcharakteristik der Leuchte üblicherweise durch Überlagerung der Abstrahlcharakteristiken einer Vielzahl unterschiedlicher Lichtquellen der Leuchte, insbesondere sämtlicher Lichtquellen der Leuchte. In einem bestimmungsgemäßen Betriebszustand der Leuchte, in dem die Leuchte zur Beleuchtung von Zuchtanlagen verwendet wird, emittieren somit eine Vielzahl unterschiedlicher Lichtquellen der Leuchte, insbesondere sämtliche Lichtquellen der Leuchte, jeweils Licht gemäß der jeweiligen Abstrahlcharakteristik der jeweiligen Lichtquelle, wobei sich das von den unterschiedlichen Lichtquellen emittierte Licht überlagert und Erzeugung eines Mischlichts, das dann die Leuchtenabstrahlcharakteristik der Leuchte aufweist, mit der die Leuchte in ihrem bestimmungsgemäßen Betriebszustand Licht abstrahlt zur Beleuchtung von Zuchtanlagen.

Zur Realisierung der gewünschten Beleuchtung von Zuchtanlagen werden bei herkömmlichen Leuchten üblicherweise Lichtquellen eingesetzt, wie sie typischerweise zur Allgemeinbeleuchtung verwendet werden und die eine Abstrahlcharakteristik aufweisen, die einem planckschen Strahler mit einer Temperatur von 5000 bis 6000 Kelvin nahekommt. Solche Lichtquellen werden üblicherweise ergänzt durch weitere Lichtquellen, die auf die jeweiligen zu züchtenden Lebewesen ausgerichtet sind. Hierdurch kann eine Beleuchtung von Zuchtanlagen realisiert werden, die sowohl den Arbeitsstätten-Richtlinien, wie beispielsweise in der geltenden ASR A3.4 "Beleuchtung" vom April 2011, zuletzt geändert GMBI 2014 beschrieben, gerecht wird als auch für Zuchtergebnisse besonders günstig ist. Allerdings geht mit diesem typischen Aufbau eine Leuchte zur Beleuchtung von Zuchtanlagen ein hoher Energieverbrauch einher, und es mangelt an einer gezielten Anpassung an die zu züchtenden Lebewesen, was der Gesamteffizienz der Zucht zuwiderläuft. Dies trifft im Besonderen bei der Zucht von Dichromaten als Lebewesen zu, wie beispielsweise Schweinen. Solche Dichromaten sind, anders als beispielsweise Menschen, die als Dichromaten drei verschiedene Rezeptoren aufweisen, die für drei unterschiedliche Wellenlängenbereiche sensitiv sind, Lebewesen, die mit ihrem Auge über zwei in unterschiedlichen Wellenlängenbereichen sensitive Rezeptoren Licht wahrnehmen. Entsprechend weisen Schweine sowie Dichromaten im Allgemeinen eine Sehempfindlichkeitskurve auf, die die Empfindlichkeit des Auges in Abhängigkeit von der Wellenlänge angibt, die zwei Maxima aufweist, wobei bei Schweinen das erste Maximum im Bereich zwischen 550 und 590 nm liegt und das zweite Maximum im Bereich zwischen 420 und 460 nm liegt. Bei herkömmlichen Leuchten zur Beleuchtung von Zuchtanlagen zur Züchtung von Dichromaten wie Schweinen werden üblicherweise standardmäßige Weißlichtquellen eingesetzt, um dem ersten Maximum der Sehempfindlichkeitskurve zu entsprechen, die ergänzt werden durch weitere Lichtquellen, die im blauen Bereich liegen, damit sowohl eine Beleuchtung gemäß ASR als auch eine Beleuchtung zur Stimulation der zu züchtenden Dichromaten erzeugt werden kann. Herkömmliche Leuchten stellen somit eine Kompromisslösung dar, die sowohl den Vorgaben gemäß ASR als auch den Bedürfnissen der zu züchtenden Lebewesen nahekommt, dies jedoch zu Lasten eines hohen Energieverbrauchs und zu Lasten einer mangelnden Optimierung auf die zu züchtenden Lebewesen. In DE 20 2005 001540 U1 ist eine für menschliche Bedürfnisse optimierte Leuchte offenbart, die unterschiedliche Lichtquellen aufweist, die sich in ihren Abstrahlcharakteristiken unterscheiden und deren Intensitätsmaxima sich in jeweils anderen Wellenlängenbereichen befinden, wobei verschiedene Lichtquellen zum Abstrahlen von jeweils unterschiedlichen Intensitäten angesteuert sind. In US 2017/290124 A1 ist eine Leuchte offenbart, die in unterschiedlichen Zuständen unterschiedliche Leuchtenabstrahlcharakteristiken aufweisen kann und die in Abhängigkeit von Einsatzbedingungen zum Abgeben von Licht mit einer jeweils anderen Abstrahlcharakteristik angesteuert wird.

Der vorliegenden Erfindung liegt die Aufgabe zugrunde, eine Leuchte zur Beleuchtung von Zuchtanlagen und/oder ein Verfahren zur Beleuchtung von Zuchtanlagen bereitzustellen, mit dem zumindest ein Nachteil herkömmlicher Leuchten beziehungsweise Verfahren zumindest teilweise behoben werden kann.

Als eine Lösung der der vorliegenden Erfindung zugrunde liegenden Aufgabe schlägt die Erfindung eine Leuchte mit den Merkmalen gemäß Anspruch 1 vor. Eine solche erfindungsgemäße Leuchte umfasst eine Steuerung und mehrere an die Steuerung angeschlossene Lichtquellen. Die Leuchte ist zur Beleuchtung von Zuchtanlagen mit einer Leuchtenabstrahlcharakteristik ausgebildet, wobei sich die Leuchtenabstrahlcharakteristik durch eine Überlagerung von Abstrahlcharakteristiken sämtlicher der vorliegend diskutierten Lichtquellen der Leuchte ergibt. An dieser Stelle sei darauf hingewiesen, dass jede Lichtquelle eine jeweils ihr zugeordnete Abstrahlcharakteristik aufweist, die angibt, welche Lichtintensität die Lichtquelle in Abhängigkeit von der Wellenlänge ausgibt, wenn sie mit ihrer Nennleistung betrieben ist. Die Leuchtenabstrahlcharakteristik ist durch eine Überlagerung der Abstrahlcharakteristiken der Lichtquellen festgelegt. Hierzu sind die Lichtquellen entsprechend ausgerichtet, und hierzu kann die Leuchte insbesondere eine Optikeinrichtung aufweisen, die den Lichtquellen nachgeschaltet ist und in der eine Vermischung der Lichtstrahlen, die von den verschiedenen Lichtquellen ausgesandt werden, erfolgt. Die Leuchtenabstrahlcharakteristik ist dabei eine Abstrahlcharakteristik der Leuchte, mit der die Leuchte bei ihrem bestimmungsgemäßen Betrieb einen Raum ausleuchtet. Typischerweise kann die Leuchtenabstrahlcharakteristik in einem hinreichenden Abstand von der Leuchte aufgenommen werden, in dem von einer vollständigen Überlagerung der Abstrahlcharakteristik der Lichtquellen der Leuchte ausgegangen werden kann, wobei dieser Abstand typischerweise circa 5 Meter von der Leuchte beträgt. Bei der erfindungsgemäßen Leuchte sind verschiedene Lichtquellen vorgesehen, die jeweils eine andere Abstrahlcharakteristik aufweisen. So umfassen die Lichtquellen der Leuchte eine erste Gruppe an Lichtquellen, die eine Abstrahlcharakteristik mit einem ersten Intensitätsmaximum aufweist, das an einer ersten Wellenlängenposition zwischen 510 und 650 nm, insbesondere zwischen 510 und 560 nm, insbesondere zwischen 520 und 550 liegt, sowie eine zweite Gruppe an Lichtquellen, die eine Abstrahlcharakteristik mit einem zweiten Intensitätsmaximum aufweist, das an einer zweiten Wellenlängenposition zwischen 451 nm und 500 nm, insbesondere zwischen 460 nm und 490 nm, insbesondere zwischen 460 nm und 480 nm liegt, sowie eine dritte Gruppe an Lichtquellen, die eine Abstrahlcharakteristik mit einem dritten Intensitätsmaximum aufweist, das an einer dritten Wellenlängenposition zwischen 420 nm und 450 nm, insbesondere zwischen 430 nm und 450 nm liegt, und eine vierte Gruppe an Lichtquellen, die eine Abstrahlcharakteristik mit einem vierten Intensitätsmaximum aufweist, das an einer vierten Wellenlängenposition zwischen 300 nm und 419 nm, insbesondere zwischen 360 nm und 410 nm liegt. Jede Gruppe an Lichtquellen weist dabei eine Abstrahlcharakteristik, das heißt eine Verteilung der von ihr abgestrahlten Lichtintensität über die Wellenlänge, wenn ihre Lichtquellen jeweils mit ihrer Nennleistung betrieben sind, auf. Bevorzugt weisen sämtliche Lichtquellen einer jeden Gruppe im Wesentlichen dieselbe Abstrahlcharakteristik, also eine Abstrahlcharakteristik mit einem Intensitätsmaximum in einem Wellenlängenbereich von ± 10 nm, insbesondere ± 5 nm um die Wellenlängenposition der Abstrahlcharakteristik der jeweiligen Gruppe auf. Die Wellenlängenposition des Intensitätsmaximums gibt an, bei welcher Wellenlänge die Abstrahlcharakteristik das Intensitätsmaximum aufweist. Das Intensitätsmaximum kann ein lokales oder absolutes Intensitätsmaximum der Abstrahlcharakteristik sein. Bevorzugt ist zumindest das erste, zweite und dritte Intensitätsmaximum jeweils das absolute Intensitätsmaximum, bevorzugt das einzige lokale Intensitätsmaximum der ersten, zweiten bzw. dritten Gruppe an Lichtquellen. Bevorzugt weist die Abstrahlcharakteristik der vierten Gruppe an Lichtquellen maximal drei, insbesondere maximal zwei lokale Intensitätsmaxima auf, wobei zumindest eines, insbesondere sämtliche der Intensitätsmaxima der Abstrahlcharakteristik der vierten Gruppe an Lichtquellen seine jeweilige Wellenlängenposition in dem für die vierte Wellenlängenposition angegeben Bereich hat. Erfindungsgemäß ist die Steuerung der Leuchte dazu ausgebildet, in einem bestimmungsgemäßen Betriebszustand der Leuchte, in dem sie mit Strom versorgt ist und zur Beleuchtung von Zuchtanlagen verwendet wird, die Lichtquellen dergestalt anzusteuern, dass das dritte Intensitätsmaximum größer ist als das zweite Intensitätsmaximum und als das vierte Intensitätsmaximum, d. h. dass der Intensitätswert des dritten Intensitätsmaximums an der dritten Wellenlängenposition größer ist als der Intensitätswert des zweiten Intensitätsmaximums an der zweiten Wellenlängenposition und als der Intensitätswert des vierten Intensitätsmaximums an der vierten Wellenlängenposition. Der Intensitätswert gibt den Wert für die Intensität an dem jeweiligen Intensitätsmaximum an, die Wellenlängenposition die Wellenlängenkoordinate des jeweiligen Intensitätsmaximums. Bevorzugt sind die verschiedenen Gruppen an Lichtquellen von der Steuerung voneinander unabhängig ansteuerbar.

Die erfindungsgemäße Leuchte bringt eine Vielzahl an Vorteilen mit sich. Die Erfinder haben erkannt, dass durch das Vorsehen von verschiedenen Lichtquellengruppen, deren Abstrahlcharakteristik jeweils ein Intensitätsmaximum an einer jeweils anderen Wellenlängenposition aufweist, wobei die Wellenlängenpositionen wie vorstehend ausgeführt festgelegt sind und darüber hinaus die Intensitätsverhältnisse der Intensitätsmaxima wie vorstehend ausgeführt festgelegt sind, auf sehr energiesparende Weise eine möglichst optimale Beleuchtung von Zuchtanlagen erzielt erden kann, insbesondere von Zuchtanlagen für Dichromaten. Denn durch das Vorsehen der ersten Lichtquellengruppe kann eine Sehempfindlichkeit in einem ersten Wellenlängenbereich angesprochen werden, wohingegen durch die zweite, dritte und vierte Lichtquellengruppe aufgrund der Verteilung ihrer Intensitätsmaxima, sowohl bezogen auf die Wellenlänge als auch bezogen auf ihren Intensitätswert, eine Sehempfindlichkeit in einem zweiten Wellenlängenbereich angesprochen werden kann, wobei aufgrund ihrer Verteilung das zweite, dritte und vierte Intensitätsmaximum eine sinnvolle Nachbildung einer Sehempfindlichkeitskurve im zweiten Wellenlängenbereich abbilden können. Die Erfinder haben erkannt, dass durch dieses spezielle Vorsehen von verschiedenen Lichtquellengruppen auf besonders energieeffiziente Weise die Sehempfindlichkeit von zu züchtenden Lebewesen angesprochen werden kann, da einzelne LEDs mit gezielt ausgewählter Abstrahlcharakteristik verwendet werden, um eine Sehempfindlichkeitskurve nachzubilden, anstatt, wie im Stand der Technik üblich, unterschiedliche, typischerweise eingesetzte Lichtquellen zu kombinieren, deren ungezielte Überlagerung zu einer energieverschwendenden Erzeugung von Licht führt, das von den zu züchtenden Lebewesen nicht oder kaum wahrgenommen wird und somit für ein optimales Zuchtergebnis überflüssig ist.

Erfindungsgemäß ist ferner in dem Betriebszustand das Intensitätsmaximum der ersten Gruppe an Lichtquellen, d. h. der Intensitätswert der Abstrahlcharakteristik der ersten Lichtquellengruppe an der ersten Wellenlängenposition größer als das Intensitätsmaximum der dritten Gruppe an Lichtquellen, d. h. der Intensitätswert der Abstrahlcharakteristik der dritten Lichtquellengruppe an der dritten Wellenlängenposition. Besonders bevorzugt weist die Abstrahlcharakteristik der ersten Gruppe an Lichtquellen eine größere Halbwertsbreite, wobei die Halbwertsbreite über die bekannte Definition "full width half maximum" definiert ist, an ihrem Intensitätsmaximum auf als die Abstrahlcharakteristik einer jeden anderen von zweiter, dritter und vierter Gruppe an Lichtquellen, wobei bevorzugt die Halbwertsbreite der Abstrahlcharakteristik der ersten Gruppe an Lichtquellen mindestens das Doppelte, insbesondere mindestens das Dreifache der Halbwertsbreite der Abstrahlcharakteristik der zweiten und dritten Gruppe an Lichtquellen, insbesondere auch der vierten Gruppe an Lichtquellen beträgt. Besonders bevorzugt weist die Abstrahlcharakteristik der ersten Gruppe an Lichtquellen eine Halbwertsbreite von mindestens 60 nm, insbesondere mindestens 90 nm auf, wohingegen die Abstrahlcharakteristik der zweiten und dritten Gruppe an Lichtquellen und insbesondere der vierten Gruppe an Lichtquellen eine Halbwertsbreite von maximal 50 nm aufweist. Durch das Vorsehen einer ersten Gruppe an Lichtquellen, die in dem Betriebszustand eine Abstrahlcharakteristik mit einem entsprechend hohen Intensitätsmaximum und insbesondere eine entsprechend großen Halbwertsbreite aufweist, kann die erste Gruppe an Lichtquellen besonders vorteilhaft auch alleine zum Ansprechen eines bestimmten Rezeptors von zu züchtenden Lebewesen geeignet sein, wohingegen zweite, dritte und vierter Gruppe an Lichtquellen gemeinsam zum Ansprechen eines zweiten Rezeptors und zum Nachbilden der Sehempfindlichkeit des zweiten Rezeptors ausgebildet sein können. Besonders bevorzugt weist die Abstrahlcharakteristik der ersten Gruppe an Lichtquellen auf Höhe des dritten Intensitätsmaximums, d. h. an dem Intensitätswert des Intensitätsmaximums der dritten Gruppe an Lichtquellen, eine Breite von mindestens 30 nm, insbesondere mindestens 50 nm auf. Die Erfinder haben erkannt, dass bei einer entsprechenden Ausgestaltung der Leuchte die Lichtquellen der ersten Gruppe an Lichtquellen auf herkömmliche Weise kostengünstig realisiert werden können, beispielsweise über phosphorfluoreszierende LEDs, und dass darüber hinaus durch die Verteilung der Intensitätsmaxima auf besonders energieeffiziente Weise ein besonders effektives Ansprechen der Sehempfindlichkeit der zu züchtenden Lebewesen erreicht werden kann. In einer Ausführungsform liegt in dem Betriebszustand das Verhältnis zwischen dem dritten und dem ersten Intensitätsmaximum, d. h. zwischen dem jeweiligen Intensitätswert des jeweiligen Intensitätsmaximums, zwischen 0,5 und 1. In einer Ausführungsform, die mit der vorgenannten bevorzugt kombinierbar ist, liegt das Verhältnis zwischen dem zweiten und dem dritten Intensitätsmaximum zwischen 0,5 und 1. In einer Ausführungsform, die mit zumindest einer, bevorzugt beiden der vorgenannten Ausführunsgformen kombinierbar ist, liegt das Verhältnis zwischen dem vierten und dem dritten Intensitätsmaximum zwischen 01, und 0,8, insbesondere zwischen 0,2 und 0,8. Durch die entsprechenden Verhältnisse der Intensitätswerte der jeweiligen Maxima, insbesondere wenn die jeweiligen Maxima absolute Intensitätsmaxima der jeweiligen Abstrahlcharakteristik darstellen, kann eine besonders effiziente und zielgerichtete Leuchtenabstrahlcharakteristik zur Beleuchtung von Zuchtanlagen bereitgestellt sein.

In einer Ausführungsform ist die erste Wellenlängenposition von der zweiten Wellenlängenposition um mindestens 50 nm, insbesondere zwischen 50 nm und 130 nm beabstandet. In einer Ausführungsform, die mit der vorgenannten kombinierbar ist, ist die vierte Wellenlängenposition von der dritten Wellenlängenposition um mindestens 30 nm, insbesondere zwischen 30 nm und 80 nm beabstandet. In einer Ausführungsform, die mit einer oder beiden der vorgenannten kombinierbar ist, liegt die zweite Wellenlängenposition näher an der dritten als an der ersten Wellenlängenposition. In einer Ausführungsform, die mit zumindest einer der vorgenannten Ausführungsformen kombinierbar ist, ist die zweite Wellenlängenposition von der dritten Wellenlängenposition um mindestens 10 nm, insbesondere zwischen 10 nm und 40 nm beabstandet. Durch die entsprechende Beabstandung der Intensitätsmaxima, insbesondere in Kombination mit den obengenannten vorteilhaften Verhältnissen der Intensitätswerte der Intensitätsmaxima, kann mit einer möglichst geringen Anzahl an unterschiedlichen Lichtquellen eine möglichst gute Nachbildung einer Sehempfindlichkeitskurve von zu züchtenden Lebewesen erfolgen, was die besonders günstige Realisierung einer Leuchte und die besonders effiziente Beleuchtung von Zuchtanlagen ermöglicht.

In einer Ausführungsform weist die vierte Gruppe an Lichtquellen eine erste und eine zweite Untergruppe an Lichtquellen auf. Die erste Untergruppe an Lichtquellen weist eine Abstrahlcharakteristik mit einem ersten Unterintensitätsmaximum an einer ersten Unterwellenlängenposition zwischen 350 nm und 395 nm auf. Die zweite Untergruppe an Lichtquellen weist eine Abstrahlcharakteristik mit einem zweiten Unterintensitätsmaximum an einer zweiten Unterwellenlängenposition zwischen 396 nm und 420 nm auf. Die beiden Unterintensitätsmaxima sind jeweils ein lokales Maximum der Abstrahlcharakteristik der vierten Gruppe an Lichtquellen. Bevorzugt weist die Abstrahlcharakteristik der vierten Gruppe an Lichtquellen ausschließlich das erste und zweite Unterintensitätsmaximum als lokale Maxima auf. Bevorzugt ist die Unterwellenlängenposition von einem der Unterintensitätsmaxima die vierte Wellenlängenposition, so dass die diesem Unterintensitätsmaximum zugeordnete Unterlichtquellengruppe ein Unterintensitätsmaximum aufweist, dessen Wellenposition identisch mit der vierten Wellenlängenposition des vierten Intensitätsmaximum ist. Bevorzugt ist dieses Unterintensitätsmaximum mit dem vierten Intensitätsmaximum identisch oder weicht um weniger als 20 % von dem vierten Intensitätsmaximum ab, wobei das vierte Intensitätsmaximum gebildet sein kann durch den Intensitätswert des genannten Unterintensitätsmaximums und einem an dieser Unterwellenlängenposition vorliegenden Intensitätswert der Abstrahlcharakteristik der anderen Untergruppe an Lichtquellen. Besonders bevorzugt ist das erste Unterintensitätsmaximum größer als das zweite Unterintensitätsmaximum. Durch das Vorsehen von Untergruppen an Lichtquellen innerhalb der vierten Gruppe an Lichtquellen kann eine Leuchtenabstrahlcharakteristik realisiert sein, die der Sehempfindlichkeit von zu züchtenden Lebewesen, insbesondere von Dichromaten besonders entgegenkommt. Denn durch das Vorsehen von solchen Untergruppen an Lichtquellen kann über die verschiedenen Unterintensitätsmaxima jeweils eine Annäherung an die Sehempfindlichkeitskurve erfolgen, so dass die Leuchtenabstrahlcharakteristik in ihrem Verlauf dem Verlauf der Sehempfindlichkeitskurve angenähert sein kann. Allgemein wird bevorzugt die Leuchte zur Beleuchtung von Zuchtanlagen eingesetzt, in denen Dichromaten gezüchtet werden, deren Sehempfindlichkeitskurve ein erstes lokale Maximum aufweist, das an einer Wellenlängenposition liegt, die näher an der ersten Wellenposition ist als an der zweiten, dritten und vierten Wellenlängenposition und bevorzugt um weniger als 100 nm von der ersten Wellenlängenposition beabstandet ist, insbesondere 10 nm bis 100 nm oberhalb der ersten Wellenlängenposition liegt, und die ein zweites lokales Maximum aufweist, das an einer Wellenlängenposition liegt, die zwischen der zweiten und vierten Wellenlängenposition liegt und insbesondere näher an der dritten Wellenlängenposition als an der zweiten und vierten Wellenlängenposition liegt, insbesondere um weniger als 30 nm, insbesondere weniger als 20 nm von der dritten Wellenlängenposition beabstandet ist. Gerade bei einem solchen Ausführungsbeispiel ist das Vorsehen von Untergruppen an Lichtquellen in der vierten Lichtquellengruppe besonders vorteilhaft, da dann hiermit dem Verlauf dieser Sehempfindlichkeitskurve besonders gut entsprochen werden kann.

Allgemein bevorzugt weist die Leuchtenabstrahlcharakteristik an der ersten, zweiten, dritten und vierten Wellenlängenposition jeweils ein lokales Maximum auf. Besonders bevorzugt weist die Leuchtenabstrahlcharakteristik jeweils zwischen zwei benachbarten Wellenlängenpositionen (d. h. erste, zweite, dritte und vierte Wellenlängenposition, insbesondere erste, zweite und dritte Wellenlängenposition sowie erste und zweite Unterwellenlängenposition) genau ein lokales Minimum auf. Besonders bevorzugt weist die Leuchtenabstrahlcharakteristik als lokale Maxima ausschließlich das erste, zweite, dritte und vierte Intensitätsmaximum und darüber hinaus höchstens zwei weitere lokale Maxima, insbesondere nur höchstens ein weiteres lokales Maximum auf, wobei das bzw. die weiteren lokalen Maxima durch eines der Unterintensitätsmaxima ausgebildet ist bzw. sind.

In einer Ausführungsform ist die Leuchtenabstrahlcharakteristik einer Sehempfindlichkeitskurve von Dichromaten nachgebildet, die ein erstes lokales Maximum an einer ersten Wellenlänge und ein zweites lokales Maximum an einer zweiten Wellenlänge aufweist und genau ein lokales Minimum zwischen den beiden lokalen Maxima aufweist. Besonders bevorzugt ist die Leuchtenabstrahlcharakteristik der Sehempfindlichkeitskurve von Schweinen nachgebildet, die hinlänglich bekannt ist. Die Leuchtenabstrahlcharakteristik ist der Sehempfindlichkeitskurve von Dichromaten nachgebildet, indem die erste Wellenlängenposition eine größere Wellenlänge als das lokale Minimum aufweist und die zweite, dritte und vierte Wellenlängenposition eine kleinere Wellenlänge als das lokale Minimum aufweist, wobei die dritte Wellenlängenposition näher an dem zweiten lokalen Maximum ist als die zweite und vierte Wellenlängenposition. Bei dem Vergleich einer Wellenlängenposition mit dem jeweiligen lokalen Maximum bzw. Minimum ist selbstverständlich abgestellt auf die Wellenlänge, an der sich das jeweilige lokale Maximum bzw. Minimum befindet. Die Erfinder haben erkannt, dass durch das Vorsehen einer Vielzahl an verschiedenen Gruppen an Lichtquellen und die gezielte Auswahl der jeweiligen Lichtquellen der jeweiligen Gruppe an Lichtquellen zur Realisierung einer jeweiligen Abstrahlcharakteristik der jeweiligen Gruppe an Lichtquellen mit einem jeweiligen Intensitätsmaximum, wobei die Wellenlängenpositionen der Intensitätsmaxima wie erläutert relativ zu den lokalen Maxima bzw. dem lokalen Minimum der Sehempfindlichkeitskurve angeordnet sind, eine besonders energieeffiziente Nachbildung der Sehempfindlichkeitskurve erreicht werden kann, mit der erzielt werden kann, dass möglichst viel von der für den Betrieb der Lichtquellen zur Realisierung der gesamten Leuchtenabstrahlcharakteristik der Leuchte verwendeten Energie tatsächlich auch von den Dichromaten als Licht wahrgenommen und bevorzugt als angenehm empfunden wird. Besonders bevorzugt ist vorgesehen, das Verhältnis zwischen dem ersten und dem zweiten lokalen Maximum, wobei selbstverständlich abgestellt wird auf den Wert des Maximums, der die Sehempfindlichkeit angibt, zwischen dem 0,3-Fachen und dem 3-Fachen des Verhältnisses zwischen dem ersten und dem zweiten Intensitätsmaximum beträgt.

In einer Ausführungsform weist die Leuchtenabstrahlcharakteristik in dem Betriebszustand einen wellenlängenabhängigen Intensitätsverlauf auf, dessen Integral über die Wellenlänge eine Gesamtintensität der Leuchtenabstrahlcharakteristik ist. Zumindest 60 %, insbesondere mindestens 70 % der Gesamtintensität liegen im Bereich zwischen 500 nm und 650 nm, mindestens 15 %, insbesondere mindestens 20 %, der gesamten Intensität liegen im Bereich zwischen 350 nm und 499 nm, und zwischen 1 % und 10 % der Gesamtintensität liegen über 650 nm. Der Anteil an der Gesamtintensität ergibt sich aus dem Integral über den jeweils angegebenen Wellenlängenbereich, das geteilt wird durch die Gesamtintensität, also des Integrals über den mit Bezug auf die Wellenlänge nicht beschränkten, gesamten Intensitätsverlauf. Besonders bevorzugt liegen 2 % bis 15 % der Gesamtintensität zwischen 350 nm und 420 nm. Besonders bevorzugt liegen 10 % bis 30 % der Gesamtintensität zwischen 421 nm und 499 nm. Die Erfinder haben festgestellt, dass durch das Vorsehen von entsprechenden Verhältnissen auf besonders effiziente Weise die Sehempfindlichkeit von Lebewesen, insbesondere von Dichromaten, angesprochen werden kann. Dabei hat sich das Vorsehen der genannten Verhältnisse in Kombination mit dem Vorsehen der Intensitätsmaxima bzw. Unterintensitätsmaxima an den genannten Wellenlängenpositionen als besonders vorteilhaft herausgestellt.

In einer besonders bevorzugten Ausführungsform weist die erfindungsgemäße Leuchte eine erste Lichtquellenteilmenge und eine zweite Lichtquellenteilmenge auf. Bevorzugt umfasst die erste Lichtquellenteilmenge die erste, zweite, dritte und vierte Gruppe an Lichtquellen, bevorzugt bilden erste, zweite, dritte und vierte Gruppe an Lichtquellen die erste Lichtquellenteilmenge. Jede der Lichtquellenteilmengen weist eine Abstrahlcharakteristik mit einer mittleren Wellenlänge auf. Die mittlere Wellenlänge ist somit eine mittlere Wellenlänge der Abstrahlcharakteristik, die sich für jede Lichtquellenteilmenge aus der Überlagerung und somit Mischung der Abstrahlcharakteristiken ihrer sämtlichen Lichtquellen ergibt. Eine solche Abstrahlcharakteristik ist ein wellenlängenabhängiger Intensitätsverlauf. Rein mathematisch wird die mittlere Wellenlänge einer solchen Abstrahlcharakteristik ermittelt, indem der wellenlängenabhängige Intensitätsverlauf in eine Vielzahl unterschiedlicher Wellenlängenpositionen aufgeteilt wird, wobei die Wellenlängenpositionen jeweils um eine selbe Differenzwellenlänge, bevorzugt 1 nm oder weniger, voneinander beabstandet sind, und eine Gesamtintensität berechnet wird, die sich aus der Summe der Intensitätswerte an sämtlichen Wellenlängenpositionen ergibt, wobei anschließend für jede Wellenlängenposition ein Produkt gebildet wird von der Wellenlängenposition mit dem Verhältnis ihres Intensitätswerts zu der Gesamtintensität und diese Produkte aufsummiert werden. Selbstverständlich kann eine solche mittlere Wellenlänge bevorzugt durch infinitesimale Aufteilung in Wellenlängenpositionen und durch Integration des wellenlängenabhängigen Intensitätsverlaufs und entsprechende Gewichtung der jeweiligen Wellenlängenposition wie erläutert erfolgen. Bei der vorliegenden erfindungsgemäßen Lösung liegt die mittlere Wellenlänge der ersten Lichtquellenteilmenge mindestens 70 nm, insbesondere zwischen 70 nm und 200 nm, insbesondere zwischen 80 nm und 150 nm, insbesondere zwischen 100 nm und 130 nm unter der mittleren Wellenlänge der zweiten Lichtquellenteilmenge. Die Steuerung ist dazu ausgebildet, die Lichtquellen der Leuchte wahlweise in einem definierten Zuchtbetriebszustand oder in einem definierten Inspektionsbetriebszustand anzusteuern. In einigen Ausführunsgformen ist die Steuerung dazu ausgebildet, die Lichtquellen der Leuchte ausschließlich in entweder dem Zuchtbetriebszustand oder dem Inspektionsbetriebszustand anzusteuern, in anderen Ausführunsgformen kann die Steuerung noch zum Ansteuern der Lichtquellen der Leuchte in weiteren Betriebszuständen ausgebildet sein. Jedenfalls sind Zuchtbetriebszustand und Inspektionsbetriebszustand unterschiedliche Betriebszustände, die die Steuerung nicht gleichzeitig gewährleisten kann. Besonders bevorzugt ist der Zuchtbetriebszustand der mit Bezug auf die oben erläuterte erfindungsgemäße Lösung beschriebene Betriebszustand. Allgemein sind bevorzugt die oben erläuterte erfindungsgemäße Lösung und die vorliegend erläuterte erfindungsgemäße Lösung miteinander kombinierbar. In dem Zuchtbetriebszustand steuert die Steuerung die Lichtquellen dergestalt an, dass weniger als 1 % einer Gesamtintensität der Leuchtenabstrahlcharakteristik von der zweiten Lichtquellenteilmenge erzeugt ist, insbesondere steuert in dem Zuchtbetriebszustand die Steuerung di Lichtquellen dergestalt an, dass die Gesamtintensität der Leuchtenabstrahlcharakteristik ausschließlich von der ersten Lichtquellenteilmenge erzeugt ist, so dass nur die Lichtquellen der ersten Lichtquellenteilmenge in dem Zuchtbetriebszustand zur Abgabe von Licht angesteuert sind. In dem Inspektionsbetriebszustand steuert die Steuerung die Lichtquellen dergestalt an, dass mindestens 5 %, insbesondere mindestens 10 %, insbesondere zwischen 5 % und 50 %, insbesondere zwischen 10 % und 30 % der Gesamtintensität der Leuchtenabstrahlcharakteristik von der zweiten Lichtquellenteilmenge erzeugt ist. Die Erfinder haben erkannt, dass das Vorsehen von zwei unterschiedlichen Lichtquellenteilmengen, die bevorzugt von der Steuerung unabhängig voneinander ansteuerbar sind, eine Leuchte für Zuchtanlagen bereitgestellt werden kann, bei denen die erste Lichtquellenteilmenge gezielt auf die Bedürfnisse der zu züchtenden Lebewesen abgestellt sein kann, wohingegen die zweite Lichtquellenteilmenge gezielt so ausgestaltet sein kann, dass sie gemeinsam mit der ersten Lichtquellenteilmenge eine arbeitsstättenrichtlinienkonforme Beleuchtung ermöglicht. Somit kann besonders energieeffizient mit der ersten Lichtquellenteilmenge ein möglichst optimales Zuchtergebnis erzielt werden, während dank des Vorsehens der zweiten Lichtquellenteilmenge und des Vorsehens von einem zum Zuchtbetriebszustand unterschiedlichen Inspektionsbetriebszustand eine Begehbarkeit der Zuchtanlage mit einer für einen Menschen angemessenen Beleuchtung auf besonders einfache Weise gewährleistet sein kann.

Besonders bevorzugt weist die Leuchte eine fünfte Gruppe an Lichtquellen auf, die eine Abstrahlcharakteristik mit einem fünften Intensitätsmaximum aufweist, das an einer fünften Wellenlängenposition zwischen 590 nm und 660 nm liegt, wobei die fünfte Wellenlängenposition bei einer längeren Wellenlänge als die erste Wellenlängenposition liegt. Bevorzugt umfasst die erste Lichtquellenteilmenge die erste, zweite, dritte und vierte Gruppe an Lichtquellen. Bevorzugt umfasst die zweite Lichtquellenteilmenge die fünfte Gruppe an Lichtquellen. Bevorzugt bilden erste, zweite, dritte und vierte Gruppe an Lichtquellen die erste Lichtquellenteilmenge und die fünfte Gruppe an Lichtquellen die zweite Lichtquellenteilmenge. Die Erfinder haben erkannt, dass durch das Vorsehen einer fünften Gruppe an Lichtquellen, deren Abstrahlcharakteristik ihr fünftes Intensitätsmaximum an einer entsprechend langwelligen Wellenlängenposition aufweist, energieeffizient und durch das Vorsehen einer schmalbandigen Abstrahlcharakteristik der fünften Gruppe an Lichtquellen eine arbeitsstättenrichtlinienkonforme Beleuchtung von Zuchtanlagen erreicht werden kann, wenn in dem Inspektionsbetriebszustand die Lichtquellen der fünften Gruppe zu den Lichtquellen von erster, zweiter, dritter und vierter Gruppe zugeschaltet werden. Besonders bevorzugt weist die Abstrahlcharakteristik der fünften Gruppe an Lichtquellen an ihrem fünften Intensitätsmaximum eine Halbwertsbreite von weniger als 50 nm, insbesondere weniger als 30 nm auf. Hierdurch kann besonders effizient durch Hinzuschalten der Lichtquellen der zweiten Lichtquellenteilmenge in Kombination mit dem von den Lichtquellen der ersten Lichtquellenteilmenge ausgesandten Licht eine arbeitsstättenrichtlinienkonforme Beleuchtung erzielt werden. Besonders bevorzugt weist die Abstrahlcharakteristik der ersten Lichtquellenteilmenge mehrere lokale Maxima auf, die jeweils an einer dem jeweiligen lokalen Maximum zugeordneten Wellenlängenposition liegen, wobei eine Wellenlängendifferenz zwischen der Wellenlängenposition mit der größten Wellenlänge und der Wellenlängenposition mit der kleinsten Wellenlänge mindestens 130 nm, insbesondere zwischen 130 nm und 200 nm beträgt, und wobei die Wellenlängenposition mit der größten Wellenlänge um mindestens 50 nm, insbesondere mindestens 70 nm unterhalb einer Wellenlängenposition desjenigen lokalen Maximums der Abstrahlcharakteristik der zweiten Lichtquellenteilmenge liegt, dessen Wellenlängenposition der Wellenlängenposition mit der größten Wellenlänge der ersten Lichtquellenteilmenge am nächsten liegt. Bevorzugt sind die lokalen Maxima der ersten Lichtquellenteilmenge durch das erste, zweite, dritte und vierte Intensitätsmaximum und zumindest ein weiteres Unterintensitätsmaximum der Abstrahlcharakteristik der vierten Gruppe an Lichtquellen gebildet und ist das einzige lokale Maximum der zweiten Lichtquellenteilmenge durch das fünfte Intensitätsmaximum gebildet.

In einer Ausführungsform weist die Leuchte einen Präsenzerkennungssensor auf, wobei die Steuerung dazu ausgebildet ist, bei Detektion einer Präsenz ausgehend von dem Zuchtbetriebszustand in den Inspektionsbetriebszustand zu schalten. Der Präsenzerkennungssensor kann beispielsweise ein automatisierter Präsenzerkennungssensor sein, beispielsweise ein Infrarot- oder Kamerabild-basierter Präsenzerkennungssensor mit nachgeschalteter Auswerteelektronik, wobei der Präsenzerkennungssensor als Präsenz eine Präsenz eines Menschen erkennt. Der Präsenzerkennungssensor kann auch beispielsweise ein mechanischer Präsenzerkennungssensor sein, der typischerweise nur von einem Menschen bedient werden kann, wie beispielsweise ein Tastsensor, der durch einen Menschen berührt werden muss. Hierzu kann der Tastsensor beispielsweise an entsprechender Position angebracht sein, beispielsweise mit einem Abstand von mindestens 1,20 m über dem Boden und/oder hinter einer für zu züchtende Lebewesen nicht passierbaren Absperrung. Durch Detektion der Präsenz über den Präsenzerkennungssensor kann die Steuerung, während sie die Lichtquellen der Leuchte im Zuchtbetriebszustand betreibt, automatisch in den Inspektionsbetriebszustand schalten. Hiermit geht der besondere Vorteil einher, dass bei jedweder Detektion einer Präsenz eines Menschen durch die Leuchte automatisiert in den Inspektionsbetriebszustand geschaltet werden kann, was die Arbeitssicherheit erhöht und eine für einen Menschen unangemessene Beleuchtung von Zuchtanlagen während der Präsenz von Menschen vermeidet. Besonders bevorzugt unterscheidet sich der Inspektionsbetriebszustand von dem Zuchtbetriebszustand dadurch, dass die zweite Lichtquellenteilmenge mit Energie versorgt ist zum Abstrahlen von Licht. Bevorzugt ist in dem Zuchtbetriebszustand die zweite Lichtquellenteilmenge nicht mit Energie versorgt oder zumindest mit weniger als 5 % der Energie versorgt, mit der sie im Inspektionsbetriebszustand versorgt ist.

Besonders bevorzugt weist die Leuchte ein zentrales Bedienelement auf, das an einem Steuereingang der Steuerung angeschlossen ist und über das die Leuchtenabstrahlcharakteristik im Zuchtbetriebszustand und im Inspektionsbetriebszustand einstellbar ist und/oder über das ein Ein- und Ausschalten der Leuchte durchführbar ist, wobei die Steuerung dazu ausgebildet ist, unabhängig von dem Bedienelement über ein von dem Präsenzerkennungssensor empfangenes Signal zwischen Zuchtbetriebszustand und Inspektionsbetriebszustand zu wechseln. Bei dem Vorsehen eines solchen zentralen Bedienelements kann somit die Leuchte über das zentrale Bedienelement und somit über den Steuereingang der Steuerung, an dem das zentrale Bedienelement angeschlossen ist, gezielt eingestellt werden, beispielsweise ein- und ausgeschaltet werden. Auch können hierdurch die Leuchtenabstrahlcharakteristiken im Zuchtbetriebszustand und im Inspektionsbetriebszustand gezielt eingestellt werden. Beispielsweise kann hierzu ein Bedienelement vorgesehen sein, an dem Regler betätigt werden können, über die eine Form der Leuchtenabstrahlcharakteristik vorgegeben werden kann. Bevorzugt sind im Allgemeinen die verschiedenen Gruppen an Lichtquellen und insbesondere die verschiedenen Untergruppen an Lichtquellen unabhängig voneinander ansteuerbar, so dass eine über das Bedienelement eingestellte, gewünschte Leuchtenabstrahlcharakteristik möglichst gut realisierbar ist. Indem zum einen ein solches zentrales Bedienelement vorgesehen ist und zum anderen die Steuerung dazu ausgebildet ist, unabhängig von dem Bedienelement über ein von dem Präsenzerkennungssensor empfangenes Signal zwischen Zuchtbetriebszustand und Inspektionsbetriebszustand zu wechseln, bietet die Leuchte eine besonders hohe Sicherheit zur Gewährleistung einer arbeitsstättenrichtlinienkonformen Beleuchtung von Zuchtanlagen, sobald die Präsenz eines Menschen erkannt wird. Denn während über das Bedienelement gezielte Einstellungen der Leuchte vorgenommen werden können, gewährleistet die Steuerung im Zusammenspiel mit dem Präsenzerkennungssensor eine automatisierte Anpassung der Beleuchtung der Zuchtanlage in Abhängigkeit davon, ob ein Mensch sich in der Zuchtanlage befindet.

Allgemein bevorzugt weist in dem Zuchtbetriebszustand die Leuchtenabstrahlcharakteristik eine kurzwelligere Gesamtlichtfarbe auf als in dem Inspektionsbetriebszustand. Besonders bevorzugt ist von dem Zuchtbetriebszustand und dem Inspektionsbetriebszustand nur der Inspektionsbetriebszustand dergestalt vorgesehen, dass eine Beleuchtung eines Raums gemäß Arbeitsstätten-Richtlinien gewährleistet ist. Nur in dem Inspektionsbetriebszustand, nicht aber in dem Zuchtbetriebszustand weist die Leuchtenabstrahlcharakteristik somit einen wellenlängenabhängigen Intensitätsverlauf auf, der arbeitsstättenrichtlinienkonform ist. Die Erfinder haben erkannt, dass für eine Vielzahl an Zuchtlebewesen, insbesondere auch für Schweine, ein kurzwelligeres Licht vorteilhafter ist als bei Menschen, so dass ein automatisiertes Wechseln zwischen Betriebszuständen, in denen zum einen eine kurzwellige Beleuchtung für die Zucht und zum anderen eine langwelligere Beleuchtung zur Gewährleistung einer arbeitsstättenrichtlinienkonformen Beleuchtung ermöglicht ist, besonders vorteilhaft ist.

In einer Ausführungsform sind die Lichtquellen der unterschiedlichen Lichtquellenteilmengen, insbesondere der unterschiedlichen Lichtquellengruppen, insbesondere sämtlicher unterschiedlicher Lichtquellengruppen, auf einer gemeinsamen Platine oder einem gemeinsamen Platinenhalter angeordnet, wobei die Steuerung über Steuerleitungen, die an der gemeinsamen Platine oder dem gemeinsamen Platinenhalter fixiert sind, sämtliche Gruppen von Lichtquellen ansteuert. Durch das Vorsehen sämtlicher Lichtquellen auf einer selben Platine oder zumindest einem selben Platinenhalter, an der die Steuerleitungen fixiert sind, kann eine besonders kompakte Realisierung der Leuchte gewährleistet sein. Die Erfinder haben erkannt, dass durch das kompakte Anordnen sämtlicher Lichtquellen, die jeweils eine andere Abstrahlcharakteristik aufweisen und jeweils anderen Lichtquellenteilmengen bzw. Gruppen bzw. Untergruppen zugeordnet sind, durch deren gezielte Ansteuerung auf besonders vorteilhafte Weise ein Mischlicht erzeugt werden kann, das in den jeweiligen Betriebszuständen dem den jeweiligen Betriebszuständen zugeordneten Zweck gerecht wird.

In einer Ausführungsform weist die Leuchte eine Optikeinrichtung auf, wobei sämtliche Lichtquellen der Leuchte dergestalt zu der Optikeinrichtung angeordnet sind, dass sie bei einer durch die Steuerung angesteuerten Energieversorgung Licht in die Optikeinrichtung abgeben. Sobald sie somit von der Steuerung zum Abgeben von Licht angesteuert sind, geben sie ihr Licht in die Optikeinrichtung ab. Die Optikeinrichtung ist dazu ausgebildet, sowohl im Zuchtbetriebszustand als auch im Inspektionsbetriebszustand das von sämtlichen Lichtquellen abgegebene Licht zu mischen und ein Mischlicht der Leuchte auszugeben, mit dem die Leuchte Licht mit der Leuchtenabstrahlcharakteristik abstrahlt. Besonders bevorzugt bildet die Optikeinrichtung eine geschlossene Außenseite der Leuchte aus, die die Lichtabstrahlfläche der Leuchte definiert, über die die Leuchte in jeglichem Betriebszustand sämtliches von ihr abgestrahltes Licht aussendet. Die Erfinder haben erkannt, dass das Vorsehen einer solchen Optikeinrichtung und das entsprechende Anordnen der Lichtquellen relativ zu der Optikeinrichtung besonders vorteilhaft ist, um eine Durchmischung der Abstrahlcharakteristiken der unterschiedlichen Lichtquellen zuverlässig zu gewährleisten, damit die Leuchte in ihrem jeweiligen Betriebszustand möglichst homogen Licht mit ihrer Leuchtenabstrahlcharakteristik abstrahlt.

In einer Ausführungsform weist die Leuchte ein Leuchtengehäuse auf, in dem sämtliche Lichtquellen der Leuchte angeordnet sind. Bevorzugt bildet das Leuchtengehäuse einen ununterbrochenen Innenraum aus, in dem sämtliche Lichtquellen angeordnet sind. Bei den sämtlichen Lichtquellen ist selbstverständlich auf die erläuterten Lichtquellen abgestellt. Besonders bevorzugt sind die Optikeinrichtung und/oder die Steuerung in das Leuchtengehäuse integriert. Beispielsweise kann die Steuerung im Innenraum des Leuchtengehäuses angeordnet sein. Beispielsweise kann die Optikeinrichtung im Innenraum des Leuchtengehäuses angeordnet sein und/oder einen Abschluss des Leuchtengehäuses ausbilden. Bevorzugt bildet das Leuchtengehäuse einen Innenraum aus, der an einer Seite durch die Optikeinrichtung verschlossen ist.

Die Erfindung betrifft ferner ein Verfahren zum Beleuchten von Zuchtanlagen mit einer Leuchtenabstrahlcharakteristik. Lichtquellen einer ersten Gruppe an Lichtquellen, die eine Abstrahlcharakteristik mit einem ersten Intensitätsmaximum aufweist, das an einer ersten Wellenlängenposition zwischen 510 nm und 650 nm liegt, sowie einer zweiten Gruppe an Lichtquellen, die eine Abstrahlcharakteristik mit einem zweiten Intensitätsmaximum aufweist, das an einer zweiten Wellenlängenposition zwischen 451 nm und 500 nm liegt, sowie einer dritten Gruppe an Lichtquellen, die eine Abstrahlcharakteristik mit einem dritten Intensitätsmaximum aufweist, das an einer dritten Wellenlängenposition zwischen 420 nm und 450 nm liegt, und einer vierten Gruppe an Lichtquellen, die eine Abstrahlcharakteristik mit einem vierten Intensitätsmaximum aufweist, das an einer vierten Wellenlängenposition zwischen 300 nm und 420 nm, insbesondere zwischen 360 nm und 410 nm liegt, werden dergestalt angesteuert, dass das dritte Intensitätsmaximum größer ist als das zweite Intensitätsmaximum und als das vierte Intensitätsmaximum und dass das erste Intensitätsmaximum größer ist als das dritte Inensitätsmaximum. In einer Ausführungsform des erfindungsgemäßen Verfahrens werden Lichtquellen einer ersten Lichtquellenteilmenge und einer zweiten Lichtquellenteilmenge, die jeweils eine Abstrahlcharakteristik mit einer mittleren Wellenlänge aufweisen, wobei die mittlere Wellenlänge der ersten Lichtquellenteilmenge mindestens 70 nm unter der mittleren Wellenlänge der zweiten Lichtquellenteilmenge liegt, angesteuert, indem ein definierter Zuchtbetriebszustand oder alternativ ein definierter Inspektionsbetriebszustand gewählt wird, wobei in dem Zuchtbetriebszustand die Lichtquellen dergestalt angesteuert werden, dass weniger als 1 % einer Gesamtintensität der Leuchtenabstrahlcharakteristik von der zweiten Lichtquellenteilmenge erzeugt ist, und in dem Inspektionsbetriebszustand die Lichtquellen dergestalt angesteuert werden, dass mindestens 5 %, insbesondere mindestens 10 % der Gesamtintensität der Leuchtenabstrahlcharakteristik von der zweiten Lichtquellenteilmenge erzeugt ist. Ausführunsgformen eines erfindungsgemäßen Verfahrens können Merkmale aufweisen, die mit Bezug zu Ausführungsformen einer erfindungsgemäßen Leuchte beschrieben sind. Ausführungsformen erfindungsgemäßer Verfahren und Leuchten können Merkmale aufweisen, die im Zusammenhang mit gattungsgemäßen Leuchten und Verfahren beschrieben sind.

Die Erfindung wird nachfolgend unter Bezugnahme auf drei Figuren anhand von Ausführungsbeispielen erläutert.

Es zeigen:
- Figur 1:: in einer schematischen Prinzipdarstellung die Leuchtenabstrahlcharakteristik einer ersten Ausführungsform einer erfindungsgemäßen Leuchte;
- Figur 2:: in einer schematischen Prinzipdarstellung die Leuchtenabstrahlcharakteristik einer zweiten Ausführungsform einer erfindungsgemäßen Leuchte;
- Figur 3:: in verschiedenen schematischen Prinzipdarstellungen Leuchtenabstrahlcharakteristiken einer dritten Ausführungsform einer erfindungsgemäßen Leuchte in verschiedenen Betriebszuständen.

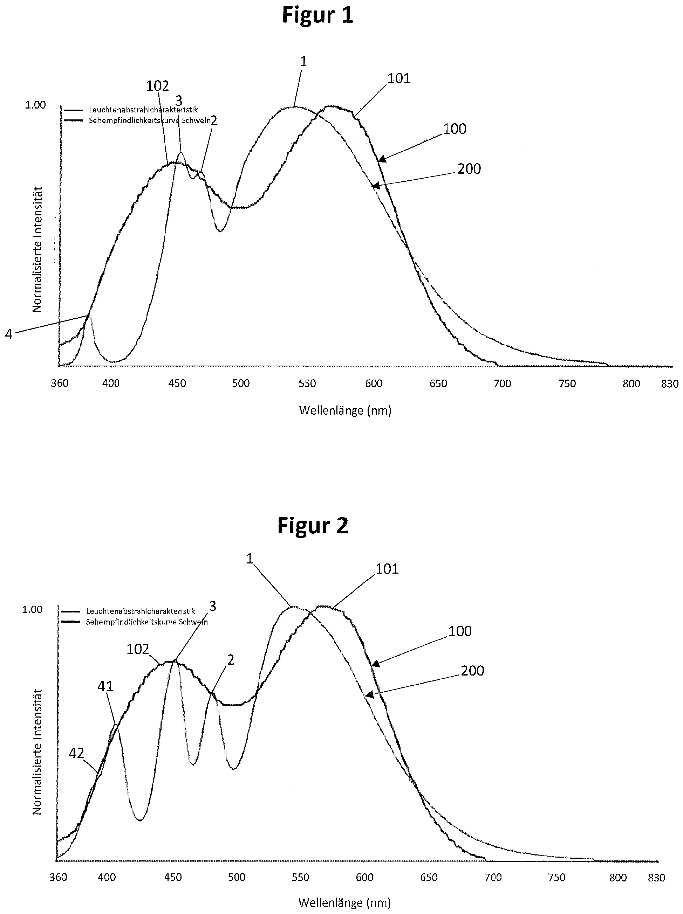

In Figur 1 ist in einer schematischen Prinzipdarstellung die Leuchtenabstrahlcharakteristik einer Ausführungsform einer erfindungsgemäßen Leuchte dargestellt. Die erfindungsgemäße Leuchte weist eine erste, zweite, dritte und vierte Gruppe an Lichtquellen auf. Jede der verschiedenen Gruppen an Lichtquellen weist jeweils eine ihr zugeordnete Abstrahlcharakteristik auf. In Figur 1 ist die Leuchtenabstrahlcharakteristik 200, die sich aus der Überlagerung sämtlicher Abstrahlcharakteristiken der verschiedenen Gruppen an Lichtquellen der Leuchte ergibt, zusammen mit der Sehempfindlichkeitskurve 100 von Schweinen dargestellt. Die Abstrahlcharakteristik der ersten Gruppe an Lichtquellen weist ein erstes Intensitätsmaximum 1 auf, die Abstrahlcharakteristik der zweiten Gruppe an Lichtquellen weist ein zweites Intensitätsmaximum 2 auf, die der dritten Gruppe an Lichtquellen ein drittes Intensitätsmaximum 3 und die der vierten Gruppe an Lichtquellen ein viertes Intensitätsmaximum 4. Die Sehempfindlichkeitskurve 100 weist genau zwei lokale Maxima 101, 102 auf, zwischen denen sich genau ein lokales Minimum befindet. Aus Figur 1 ist zu erkennen, dass durch das gezielte Vorsehen von Lichtquellengruppen, deren Abstrahlcharakteristik ein Intensitätsmaximum an jeweils einer anderen Wellenlängenposition aufweist, die Sehempfindlichkeitskurve 100 durch die Leuchtenabstrahlcharakteristik 200 auf besonders effiziente Weise angenähert werden kann. Denn während das erste Intensitätsmaximum 1 dem ersten lokalen Maximum 101 der Sehempfindlichkeitskurve 100 nahekommt, nähern sich das zweite, dritte und vierte Intensitätsmaximum 2, 3, 4 dem Kurvenverlauf um das zweite lokale Maximum 102 der Sehempfindlichkeitskurve 100 an, so dass über diese Intensitätsmaxima 1, 2, 3, 4 der unter dem lokalen Minimum liegende Bereich der Sehempfindlichkeitskurve 100 angesprochen werden kann.

In Figur 2 ist die Leuchtenabstrahlcharakteristik 200 einer weiteren Ausführungsform einer erfindungsgemäßen Leuchte schematisch gemeinsam mit der Sehempfindlichkeitskurve 100 von Schweinen dargestellt. Die zweite Ausführungsform unterscheidet sich von der ersten Ausführungsform zum einen dadurch, dass die vierte Gruppe an Lichtquellen eine erste und eine zweite Untergruppe an Lichtquellen aufweist, deren Abstrahlcharakteristik ein erstes Unterintensitätsmaximum 41 bzw. ein zweites Unterintensitätsmaximum 42 aufweist, zum anderen unterscheiden sich die Verhältnisse zwischen den verschiedenen Intensitätsmaxima. Aus Figur 2 ist ersichtlich, dass durch die in Figur 2 gezeigte, besonders vorteilhafte Ausführunsgform die Sehempfindlichkeitskurve 100 von Schweinen noch gezielter mit der Leuchtenabstrahlcharakteristik 200 angesprochen werden kann.

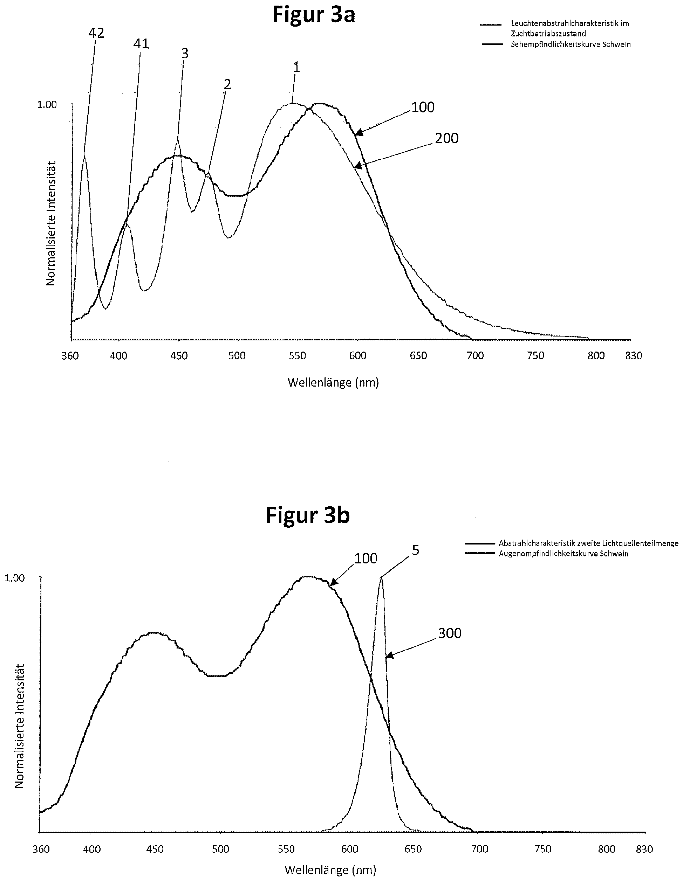

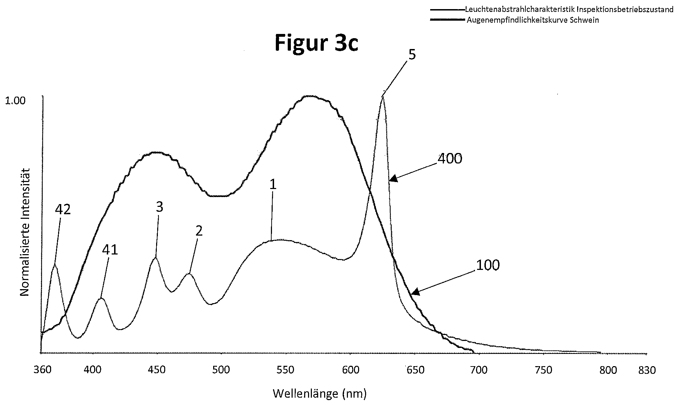

In Figur 3 umfassend die Figuren 3a, 3b und 3c sind in verschiedenen schematischen Prinzipdarstellungen verschiedene Betriebszustände einer weiteren Ausführunsgform einer erfindungsgemäßen Leuchte dargestellt. In Figur 3a ist die Leuchtenabstrahlcharakteristik 200 im Zuchtbetriebszustand dargestellt, in Figur 3c die Leuchtenabstrahlcharakteristik 400 im Inspektionsbetriebszustand, in Figur 3b die Leuchtenabstrahlcharakteristik 300, wenn nur eine zweite Lichtquellenteilmenge der Leuchte betrieben wird. Die mittels den Figuren 3a, 3b und 3c erläuterte Ausführungsform einer erfindungsgemäßen Leuchte weist eine Steuerung auf, die automatisch zwischen dem Zuchtbetriebszustand gemäß Figur 3a und dem Inspektionsbetriebszustand 3c unterscheiden kann. Hierzu schaltet die Leuchte ausgehend von dem in Figur 3a erläuterten Zuchtbetriebszustand automatisch in den Inspektionsbetriebszustand gemäß Figur 3c, sobald die Präsenz eines Menschen über einen Präsenzerkennungssensor erfasst wurde. Sobald über einen vorher festgelegten Zeitraum, bevorzugt von mindestens 15 Minuten, keine Präsenz eines Menschen mehr erfasst wurde, schaltet die Leuchte automatisch von dem Inspektionsbetriebszustand zurück in den Zuchtbetriebszustand. Aus Figur 3a ist zu erkennen, dass die beschriebene Ausführunsgform einer erfindungsgemäßen Leuchte eine erste, zweite, dritte und vierte Gruppe an Lichtquellen aufweist, wobei die vierte Gruppe an Lichtquellen eine erste und zweite Untergruppe an Lichtquellen aufweist. Die jeweiligen Untergruppen der Lichtquellen weisen ein jeweils zugeordnetes Unterintensitätsmaximum 41, 42 auf, von denen das zweite Unterintensitätsmaximum 42 das vierte Intensitätsmaximum 4 der vierten Gruppe an Lichtquellen bildet. Erste, zweite und dritte Gruppe an Lichtquellen weisen jeweils eine Abstrahlcharakteristik mit nur einem lokalen Maximum, nämlich ihrem jeweiligen Intensitätsmaximum 1, 2, 3 auf. Aus Figur 3a ist zu erkennen, dass die im Zuchtbetriebszustand realisierte Leuchtenabstrahlcharakteristik 200 zwar für Schweine mit der Sehempfindlichkeitskurve 100 günstig ist, nicht jedoch für Menschen, da im langwelligen Wellenlängenbereich, für den der Mensch sensibel ist, kaum Intensität abgestrahlt wird. Die in Figur 3 erläuterte Ausführunsgform einer erfindungsgemäßen Leuchte weist jedoch neben einer ersten Lichtquellenteilmenge, die durch die erste, zweite, dritte und vierte Gruppe an Lichtquellen gebildet ist, eine zweite Lichtquellenteilmenge auf, die durch eine fünfte Gruppe an Lichtquellen gebildet ist. Diese fünfte Gruppe an Lichtquellen und somit die zweite Lichtquellenteilmenge weist eine Abstrahlcharakteristik 300 mit einem fünften Intensitätsmaximum 5 auf, das wesentlich langwelliger ist als sämtliche Intensitätsmaxima 1, 2, 3, 4 der ersten Lichtquellenteilmenge. Sobald die Präsenz eines Menschen erkannt wird, schaltet die Steuerung der Leuchte ausgehend von dem in Figur 3a gezeigten Zuchtbetriebszustand die Lichtquellen der zweiten Lichtquellenteilmenge zu, wodurch sich die Leuchtenabstrahlcharakteristik 400 im Inspektionsbetriebszustand ergibt, die in Figur 3c dargestellt ist, und die arbeitsstättenrichtlinienkonform ist.

### Bezugszeichenliste

- 1: erstes Intensitätsmaximum
- 2: zweites Intensitätsmaximum
- 3: drittes Intensitätsmaximum
- 4: viertes Intensitätsmaximum
- 5: fünftes Intensitätsmaximum
- 41: erstes Unterintensitätsmaximum
- 42: zweites Unterintensitätsmaximum
- 100: Sehempfindlichkeitskurve
- 101: erstes lokales Maximum
- 102: zweites lokales Maximum
- 200: Leuchtenabstrahlcharakteristik
- 300: Leuchtenabstrahlcharakteristik einer zweiten Lichtquellenteilmenge
- 400: Leuchtenabstrahlcharakteristik im Inspektionsbetriebszustand

## Patentansprüche

1. Leuchte zur Beleuchtung von Zuchtanlagen mit einer Leuchtenabstrahlcharakteristik (200), die Leuchte umfassend eine Steuerung und mehrere an die Steuerung angeschlossene Lichtquellen, wobei die Leuchtenabstrahlcharakteristik (200) durch eine Überlagerung von Abstrahlcharakteristiken der Lichtquellen festgelegt ist, wobei die Lichtquellen eine erste Gruppe an Lichtquellen umfassen, die eine Abstrahlcharakteristik mit einem ersten Intensitätsmaximum (1) aufweist, das an einer ersten Wellenlängenposition zwischen 510 nm und 650 nm liegt, sowie eine zweite Gruppe an Lichtquellen umfassen, die eine Abstrahlcharakteristik mit einem zweiten Intensitätsmaximum (2) aufweist, das an einer zweiten Wellenlängenposition zwischen 451 nm und 500 nm liegt, sowie eine dritte Gruppe an Lichtquellen umfassen, die eine Abstrahlcharakteristik mit einem dritten Intensitätsmaximum (3) aufweist, das an einer dritten Wellenlängenposition zwischen 420 nm und 450 nm liegt, und eine vierte Gruppe an Lichtquellen umfassen, die eine Abstrahlcharakteristik mit einem vierten Intensitätsmaximum (4) aufweist, das an einer vierten Wellenlängenposition zwischen 300 nm und 419 nm, insbesondere zwischen 360 nm und 410 nm liegt, wobei die Steuerung dazu ausgebildet ist, die Lichtquellen in einem Betriebszustand der Leuchte dergestalt anzusteuern, dass das dritte Intensitätsmaximum (3) größer ist als das zweite Intensitätsmaximum (2) und als das vierte Intensitätsmaximum (4) und **dadurch gekennzeichnet, dass** das erste Intensitätsmaximum (1) größer ist als das dritte Intensitätsmaximum (3).

2. Leuchte nach einem der vorangehenden Ansprüche,
**dadurch gekennzeichnet, dass**
in dem Betriebszustand das Verhältnis zwischen dem dritten und dem ersten Intensitätsmaximum (3, 1) zwischen 0,5 und 1 liegt, und/oder das Verhältnis zwischen dem zweiten und dem dritten Intensitätsmaximum (2, 3) zwischen 0,5 und 1 liegt, und/oder das Verhältnis zwischen dem vierten und dem dritten Intensitätsmaximum (4, 3) zwischen 0,1 und 0,8 liegt.

3. Leuchte nach einem der vorangehenden Ansprüche,
**dadurch gekennzeichnet, dass**
die erste von der zweiten Wellenlängenposition um mindestens 50 nm, insbesondere zwischen 50 nm und 130 nm beabstandet ist, und/oder dass die vierte von der dritten Wellenlängenposition um mindestens 30 nm, insbesondere zwischen 30 nm und 80 nm beabstandet ist, und/oder dass die zweite Wellenlängenposition näher an der dritten als an der ersten Wellenlängenposition liegt.

4. Leuchte nach einem der vorangehenden Ansprüche,
**dadurch gekennzeichnet, dass**
die vierte Gruppe an Lichtquellen eine erste und eine zweite Untergruppe an Lichtquellen aufweist, wobei die erste Untergruppe eine Abstrahlcharakteristik mit einem ersten Unterintensitätsmaximum (41) an einer ersten Unterwellenlängenposition zwischen 350 nm und 395 nm aufweist und die zweite Untergruppe eine Abstrahlcharakteristik mit einem zweiten Unterintensitätsmaximum (42) an einer zweiten Unterwellenlängenposition zwischen 396 und 420 nm aufweist, wobei die Unterwellenlängenposition von einem der Unterintensitätsmaxima (41, 42) die vierte Wellenlängenposition ist, wobei insbesondere das erste Unterintensitätsmaximum (41) größer als das zweite Unterintensitätsmaximum (42) ist.

5. Leuchte nach einem der vorangehenden Ansprüche,
**dadurch gekennzeichnet, dass**
die Leuchtenabstrahlcharakteristik (200) an der ersten, zweiten, dritten und vierten Wellenlängenposition jeweils ein lokales Maximum (101, 102) aufweist und insbesondere jeweils zwischen zwei benachbarten Wellenlängenpositionen genau ein lokales Minimum aufweist.

6. Leuchte nach einem der vorangehenden Ansprüche,
**dadurch gekennzeichnet, dass**
die Leuchtenabstrahlcharakteristik (200) einer Sehempfindlichkeitskurve von Dichromaten, die ein erstes lokales Maximum (101) an einer ersten Wellenlänge und ein zweites lokales Maximum (102) an einer zweiten Wellenlänge aufweist und genau ein lokales Minimum zwischen den beiden lokalen Maxima (101, 102) aufweist, insbesondere der Sehempfindlichkeitskurve (100) von Schweinen, nachgebildet ist, indem die erste Wellenlängenposition eine größere Wellenlänge als das lokale Minimum aufweist und die zweite, dritte und vierte Wellenlängenposition eine kleinere Wellenlänge als das lokale Minimum aufweisen, wobei die dritte Wellenlängenposition näher an dem zweiten lokalen Maximum (102) ist als die zweite und vierte Wellenlängenposition, wobei insbesondere das Verhältnis zwischen dem ersten und dem zweiten lokalen Maximum (101, 102; zwischen dem 0,3-Fachen und dem 3-Fachen des Verhältnisses zwischen dem ersten und dem zweiten Intensitätsmaximum (1, 2) beträgt.

7. Leuchte nach einem der vorangehenden Ansprüche,
**dadurch gekennzeichnet, dass**
in dem Betriebszustand die Leuchtenabstrahlcharakteristik (200) einen wellenlängenabhängigen Intensitätsverlauf aufweist, dessen Integral über die Wellenlänge eine Gesamtintensität der Leuchtenabstrahlcharakteristik (200) ist, wobei zumindest 60 %, insbesondere mindestens 70 %, der Gesamtintensität im Bereich zwischen 500 nm und 650 nm liegt und mindestens 15 %, insbesondere mindestens 20 %, der Gesamtintensität im Bereich zwischen 350 nm und 499 nm liegt und zwischen 1 % und 10 % über 650 nm liegt, wobei insbesondere 2 % bis 15 % der Gesamtintensität zwischen 350 nm und 420 nm liegt und 10 % bis 30 % zwischen 421 nm und 499 nm liegt.

8. Leuchte nach einem der vorangehenden Ansprüche,
**dadurch gekennzeichnet, dass**
die Leuchte eine erste Lichtquellenteilmenge aufweist, sowie eine zweite Lichtquellenteilmenge aufweist, wobei jede der Lichtquellenteilmengen eine Abstrahlcharakteristik mit einer mittleren Wellenlänge aufweist, wobei die mittlere Wellenlänge der ersten Lichtquellenteilmenge mindestens 70 nm unter der mittleren Wellenlänge der zweiten Lichtquellenteilmenge liegt, wobei die Steuerung dazu ausgebildet ist, die Lichtquellen der Leuchte in einem definierten Zuchtbetriebszustand und alternativ dazu in einem definierten Inspektionsbetriebszustand anzusteuern, wobei in dem Zuchtbetriebszustand die Steuerung die Lichtquellen dergestalt ansteuert, dass weniger als 1 % einer Gesamtintensität der Leuchtenabstrahlcharakteristik (200) von der zweiten Lichtquellenteilmenge erzeugt ist, und wobei in dem Inspektionsbetriebszustand die Steuerung die Lichtquellen dergestalt ansteuert, dass mindestens 5 %, insbesondere mindestens 10 % der Gesamtintensität der Leuchtenabstrahlcharakteristik (400) von der zweiten Lichtquellenteilmenge erzeugt ist.

9. Leuchte nach Anspruch 8,
**dadurch gekennzeichnet, dass**
die Leuchte eine fünfte Gruppe an Lichtquellen aufweist, die eine Abstrahlcharakteristik mit einem fünften Intensitätsmaximum (5) aufweist, das an einer fünften Wellenlängenposition zwischen 590 nm und 660 nm liegt, wobei die fünfte Wellenlängenposition bei einer längeren Wellenlänge als die erste Wellenlängenposition liegt, wobei die erste Lichtquellenteilmenge die erste, zweite, dritte und vierte Gruppe an Lichtquellen umfasst und die zweite Lichtquellenteilmenge die fünfte Gruppe an Lichtquellen umfasst.

10. Leuchte nach einem der Ansprüche 8 oder 9,
**dadurch gekennzeichnet, dass**
die Leuchte einen Präsenzerkennungssensor aufweist, wobei die Steuerung dazu ausgebildet ist, bei Detektion einer Präsenz ausgehend von dem Zuchtbetriebszustand in den Inspektionsbetriebszustand zu schalten, wobei sich insbesondere der Inspektionsbetriebszustand von dem Zuchtbetriebszustand dadurch unterscheidet, dass die zweite Lichtquellenteilmenge mit Energie versorgt ist zum Abstrahlen von Licht, wobei insbesondere die Leuchte ein zentrales Bedienelement aufweist, das an einem Steuereingang der Steuerung angeschlossen ist und über das die Leuchtenabstrahlcharakteristik (400) im Zuchtbetriebszustand und im Inspektionsbetriebszustand einstellbar ist und/oder über das ein Ein- und Ausschalten der Leuchte durchführbar ist, wobei die Steuerung dazu ausgebildet ist, unabhängig von dem Bedienelement über ein von dem Präsenzerkennungssensor empfangenes Signal zwischen Zuchtbetriebszustand und Inspektionsbetriebszustand zu wechseln.

11. Leuchte nach einem der Ansprüche 8 bis 10,
**dadurch gekennzeichnet, dass**
in dem Zuchtbetriebszustand die Leuchtenabstrahlcharakteristik (200, 400) eine kurzwelligere Gesamtlichtfarbe aufweist als in dem Inspektionsbetriebszustand, wobei insbesondere von dem Zuchtbetriebszustand und dem Inspektionsbetriebszustand nur der Inspektionsbetriebszustand eine Beleuchtung eines Raums gemäß Arbeitsstätten-Richtlinie gewährleistet.

12. Leuchte nach einem der vorangehenden Ansprüche,
**dadurch gekennzeichnet, dass**
die Lichtquellen der unterschiedlichen Lichtquellengruppen auf einer gemeinsamen Platine oder einem gemeinsamen Platinenhalter angeordnet sind, wobei die Steuerung über Steuerleitungen, die an der gemeinsamen Platine oder dem gemeinsamen Platinenhalter fixiert sind, sämtliche Gruppen von Lichtquellen ansteuert.

13. Leuchte nach einem der vorangehenden Ansprüche,
**dadurch gekennzeichnet, dass**
die Leuchte eine Optikeinrichtung umfasst, wobei sämtliche Lichtquellen dergestalt zu der Optikeinrichtung angeordnet sind, dass sie bei durch die Steuerung angesteuerter Energieversorgung Licht in die Optikeinrichtung abgeben, wobei die Optikeinrichtung dazu ausgebildet ist, das von sämtlichen Lichtquellen abgegebene Licht zu mischen und ein Mischlicht der Leuchte auszugeben, mit dem die Leuchte Licht mit der Leuchtenabstrahlcharakteristik (200, 400) abstrahlt.

14. Leuchte nach einem der vorangehenden Ansprüche,
**dadurch gekennzeichnet, dass**
die Leuchte ein Leuchtengehäuse aufweist, in dem sämtliche Lichtquellen der Leuchte und insbesondere die Optikeinrichtung und/oder insbesondere die Steuerung integriert sind.

15. Verfahren zum Beleuchten von Zuchtanlagen mit einer Leuchtenabstrahlcharakteristik (200, 400), wobei Lichtquellen einer ersten Gruppe an Lichtquellen, die eine Abstrahlcharakteristik mit einem ersten Intensitätsmaximum (1) aufweist, das an einer ersten Wellenlängenposition zwischen 510 nm und 650 nm liegt, sowie einer zweiten Gruppe an Lichtquellen, die eine Abstrahlcharakteristik mit einem zweiten Intensitätsmaximum (2) aufweist, das an einer zweiten Wellenlängenposition zwischen 451 nm und 500 nm liegt, sowie einer dritten Gruppe an Lichtquellen, die eine Abstrahlcharakteristik mit einem dritten Intensitätsmaximum (3) aufweist, das an einer dritten Wellenlängenposition zwischen 420 nm und 450 nm liegt, und einer vierten Gruppe an Lichtquellen, die eine Abstrahlcharakteristik mit einem vierten Intensitätsmaximum (4) aufweist, das an einer vierten Wellenlängenposition zwischen 300 nm und 420 nm, insbesondere zwischen 360 nm und 410 nm liegt, dergestalt angesteuert werden, dass das dritte Intensitätsmaximum (3) größer ist als das zweite Intensitätsmaximum (2) und als das vierte Intensitätsmaximum (4) und **dadurch gekennzeichnet, dass** das erste Intensitätsmaximum (1) größer ist als das dritte Intensitätsmaximum (3).

16. Verfahren nach Anspruch 15,
**dadurch gekennzeichnet, dass**
Lichtquellen einer ersten Lichtquellenteilmenge und einer zweiten Lichtquellenteilmenge, die jeweils eine Abstrahlcharakteristik mit einer mittleren Wellenlänge aufweisen, wobei die mittlere Wellenlänge der ersten Lichtquellenteilmenge mindestens 70 nm unter der mittleren Wellenlänge der zweiten Lichtquellenteilmenge liegt, angesteuert werden, indem ein definierter Zuchtbetriebszustand oder ein definierter Inspektionsbetriebszustand gewählt wird, wobei in dem Zuchtbetriebszustand die Lichtquellen dergestalt angesteuert werden, dass weniger als 1 % einer Gesamtintensität der Leuchtenabstrahlcharakteristik (200) von der zweiten Lichtquellenteilmenge erzeugt ist, und in dem Inspektionsbetriebszustand die Lichtquellen dergestalt angesteuert werden, dass mindestens 5 %, insbesondere mindestens 10 % der Gesamtintensität der Leuchtenabstrahlcharakteristik (400) von der zweiten Lichtquellenteilmenge erzeugt ist.

## Claims

1. Light for illuminating breeding facilities having a light radiation characteristic (200), the light comprising a controller and a plurality of light sources connected to the controller, wherein the light radiation characteristic (200) is defined by a superposition of radiation patterns of the light sources, wherein the light sources comprise a first group of light sources having a radiation characteristic with a first intensity maximum (1) being at a first wavelength position between 510 nm and 650 nm, and a second group of light sources having a radiation characteristic with a second intensity maximum (2) being at a second wavelength position between 451 nm and 500 nm, and a third group of light sources having a radiation characteristic with a third intensity maximum (3) being at a third wavelength position between 420 nm and 450 nm, and a fourth group of light sources having a radiation characteristic with a fourth intensity maximum (4) being at a fourth wavelength position between 300 nm and 419 nm, in particular between 360 nm and 410 nm,
wherein the controller is designed to control the light sources in an operation state of the light in such a way that the third intensity maximum (3) is greater than the second intensity maximum (2) and the fourth intensity maximum (4), and **characterized in that** the first intensity maximum (1) is greater than the third intensity maximum (3).

2. Light according to any one of the preceding claims, **characterized in that**,
in the operating state, the ratio between the third and the first intensity maximum (3, 1) is between 0.5 and 1, and/or the ratio between the second and the third intensity maximum (2, 3) is between 0.5 and 1, and/or the ratio between the fourth and the third intensity maximum (4, 3) is between 0.1 and 0.8.

3. Light according to any one of the preceding claims, **characterized in that**
the first wavelength position is spaced from the second wavelength position by at least 50 nm, in particular between 50 nm and 130 nm, and/or that the fourth wavelength position is spaced from the third wavelength position by at least 30 nm, in particular between 30 nm and 80 nm, and/or that the second wavelength position is closer to the third than to the first wavelength position.

4. Light according to any one of the preceding claims, **characterized in that**
the fourth group of light sources comprises a first and a second subgroup of light sources, the first subgroup having a radiation characteristic with a sub-intensity maximum (41) at a first sub-wavelength position between 350 nm and 395 nm and and the second subgroup having a radiation characteristic with a second sub-intensity maximum (42) at a second sub-wavelength position between 396 and 420 nm,
wherein the sub-wavelength position of one of the sub-intensity maxima (41, 42) is the fourth
wavelength position, wherein in particular the first sub-intensity maximum (41) is greater than the second sub-intensity maximum (42).

5. Light according to any one of the preceding claims, **characterized in that**
the light radiation characteristic (200) has a local maximum (101, 102) at each of the first, second, third and fourth wavelength positions and, in particular, has exactly one local minimum between each of two adjacent wavelength positions.

6. Light according to any one of the preceding claims, **characterized in that**
the light radiation characteristic (200) is modelled on a visual sensitivity curve of dichromats which has a first local maximum (101) at a first wavelength and a second local maximum (102) at a second wavelength and has exactly one local minimum between the two local maxima (101, 102), in particular on the visual sensitivity curve (100) of pigs, **in that** the first wavelength position has a longer wavelength than the local minimum and the second, third and fourth wavelength positions have a smaller wavelength than the local minimum, wherein the third wavelength position is closer to the second local maximum (102) than the second and fourth wavelength positions, wherein in particular the ratio between the first and the second local maximum (101, 102) is between 0.3 and 3 times the ratio between the first and second intensity maxima (1, 2).

7. Light according to any one of the preceding claims, **characterized in that**,
in the operation state, the light radiation characteristic (200) has a wavelength-dependent intensity characteristic whose integral over the wavelength is a total intensity of the light radiation characteristic (200), at least 60%, in particular at least 70%, of the total intensity being in the range between 500 nm and 650 nm and at least 15%, in particular at least 20%, of the total intensity being in the range between 350 nm and 499 nm and between 1% and 10% being above 650 nm, wherein in particular 2% to 15% of the total intensity are between 350 nm and 420 nm and 10% to 30% are between 421 nm and 499 nm.

8. Light according to any one of the preceding claims, **characterized in that**
the light comprises a first light source subset, and a second light source subset, each of the light source subsets having a radiation characteristic with an average wavelength, wherein the average wavelength of the first light source subset is at least 70 nm below the average wavelength of the second light source subset, wherein the controller is adapted to drive the light sources of the light in a defined breeding mode and, alternatively, in a defined inspection mode, wherein in the breeding mode the controller drives the light sources such that less than 1% of a total intensity of the light radiation characteristic (200) is generated by the second light source subset and wherein in the inspection mode the controller controls the light sources such that at least 5%, in particular at least 10% of the total intensity of the light radiation characteristic (400) is generated by the second light source subset.

9. Light according to claim 8,
**characterized in that**
the light comprises a fifth group of light sources having a radiation characteristic with a fifth intensity maximum (5) being at a fifth wavelength position between 590 nm and 660 nm, the fifth wavelength position being at a longer wavelength than the first wavelength position, wherein the first light source subset comprises the first, second, third and fourth group of light sources and the second light source subset comprises the fifth group of light sources.

10. Light according to any one of claims 8 or 9,
**characterized in that**
the light has a presence detection sensor, the controller being designed to switch from the breeding mode to the inspection mode upon detection of a presence, the inspection mode differing in particular from the breeding mode **in that** the second light source subset is supplied with energy for radiating light, wherein in particular the light has a central operating element which is connected to a control input of the controller and by means of which the light radiation characteristic (400) can be set in the breeding mode and in the inspection mode and/or by means of which the light can be switched on and off, wherein the controller is designed to switch, independently of the control element to switch between the breeding mode and the inspection mode by means of a signal received from the presence detection sensor.

11. Light according to any one of claims 8 to 10,
**characterized in that**
in the breeding mode, the light radiation characteristic (200, 400) has a shorter-wave overall light color than in the inspection mode, wherein, in particular, of the breeding mode and the inspection mode, only the inspection mode ensures illumination of a room in accordance with the workplace directive.

12. Light according to any one of the preceding claims, **characterized in that**
the light sources of the different light source groups are arranged on a common board or a common board holder, wherein the controller drives all groups of light sources via control lines fixed to the common board or the common board holder.

13. Light according to any one of the preceding claims, **characterized in that**
the light comprises an optical device, all the light sources being arranged in relation to the optical device in such a way that, when they emit light into the optical device when the power supply is controlled by the controller, the optical device being designed to mix the light emitted by all the light sources and to output a mixed light of the light device with which the light device radiates light with the light radiation characteristic (200, 400).

14. Light according to any one of the preceding claims, **characterized in that**
the light has a light housing in which all the light sources of the light and, in particular, the optical device and/or, in particular, the controller are integrated.

15. Method for illuminating breeding facilities with a light radiation characteristic (200, 400), wherein light sources of a first group of light sources, which have a radiation characteristic with a first intensity maximum
(1) being at a first wavelength position between 510 nm and 650 nm, and a second group of light sources having a radiation characteristic with a second intensity maximum (2) being at a second wavelength position between 451 nm and 500 nm, and a third group of light sources having a radiation characteristic with a third intensity maximum (3) being at a third wavelength position between 420 nm and 450 nm, and a fourth group of light sources having a radiation characteristic with a fourth intensity maximum (4) being at a fourth wavelength position between 300 nm and 420 nm, in particular between 360 nm and 410 nm, are driven in such a way that the third intensity maximum (3) is greater than the second intensity maximum (2) and the fourth intensity maximum (4), and
**characterized in that**
the first intensity maximum (1) is greater than the third intensity maximum (3).

16. Method according to claim 15,
**characterized in that**
light sources of a first light source subset and a second light source subset, each having a radiation characteristic with an average wavelength, the average wavelength of the first light source subset being at least 70 nm below the average wavelength of the second light source subset,
are driven by selecting a defined breeding mode or a defined inspection mode, wherein in the breeding mode, the light sources are driven in such a manner that less than 1% of a total intensity of the light radiation characteristic (200) is generated by the second light source subset, and in the inspection mode the light sources are driven in such a way that at least 5%, in particular at least 10%, of the total intensity of the light radiation characteristic (400) are generated by the second light source subset.

## Revendications

1. Luminaire pour l'éclairage d'installations d'élevage avec une caractéristique de rayonnement de luminaire (200), le luminaire comprenant un dispositif de commande et plusieurs sources lumineuses raccordées au dispositif de commande, la caractéristique de rayonnement de luminaire (200) étant déterminée par une superposition de caractéristiques de rayonnement des sources lumineuses, les sources lumineuses comprenant un premier groupe de sources lumineuses qui présente une caractéristique de rayonnement avec un premier maximum d'intensité (1) qui se situe à une première position de longueur d'onde entre 510 nm et 650 nm, et un deuxième groupe de sources lumineuses qui présente une caractéristique de rayonnement avec un deuxième maximum d'intensité (2) qui se situe à une deuxième position de longueur d'onde entre 451 nm et 500 nm, et un troisième groupe de sources lumineuses qui présente une caractéristique de rayonnement avec un troisième maximum d'intensité (3) qui se situe à une troisième position de longueur d'onde entre 420 nm et 450 nm, et un quatrième groupe de sources lumineuses qui présente une caractéristique de rayonnement avec un quatrième maximum d'intensité (4) qui se situe à une quatrième position de longueur d'onde entre 300 nm et 419 nm, en particulier entre 360 nm et 410 nm,
le dispositif de commande étant conçu pour commander les sources lumineuses dans un état de fonctionnement du luminaire de telle sorte que le troisième maximum d'intensité (3) soit plus grand que le deuxième maximum d'intensité (2) et que le quatrième maximum d'intensité (4), et **caractérisé en ce que** le premier maximum d'intensité (1) est plus grand que le troisième maximum d'intensité (3).

2. Luminaire selon l'une quelconque des revendications précédentes,
**caractérisé en ce que**,
dans l'état de fonctionnement, le rapport entre le troisième et le premier maximum d'intensité (3, 1) est compris entre 0,5 et 1, et/ou le rapport entre le deuxième et le troisième maximum d'intensité (2, 3) est compris entre 0,5 et 1, et/ou le rapport entre le quatrième et le troisième maximum d'intensité (4, 3) est compris entre 0,1 et 0,8.

3. Luminaire selon l'une quelconque des revendications précédentes, **caractérisé en ce que**
la première position de longueur d'onde est espacée de la deuxième position de longueur d'onde d'au moins 50 nm, en particulier entre 50 nm et 130 nm, et/ou que la quatrième position de longueur d'onde est espacée de la troisième position de longueur d'onde d'au moins 30 nm, en particulier entre 30 nm et 80 nm, et/ou que la deuxième position de longueur d'onde est plus proche de la troisième que de la première position de longueur d'onde.

4. Luminaire selon l'une quelconque des revendications précédentes, **caractérisé en ce que**
le quatrième groupe de sources lumineuses comprend un premier et un deuxième sous-groupe de sources lumineuses, le premier sous-groupe présentant une caractéristique de rayonnement avec un maximum de sous-intensité (41) à une première position de sous-longueur d'onde entre 350 nm et 395 nm et le deuxième sous-groupe a une caractéristique de rayonnement avec une deuxième maximum de sous-intensité (42) à une deuxième position de sous-longueur d'onde entre 396 et 420 nm,
la position de sous-longueur d'onde de l'un des maxima de sous-intensité (41, 42) étant la quatrième longueur d'onde,
le premier maximum de sous-intensité (41) étant notamment plus grand que le deuxième maximum de sous-intensité (42).

5. Luminaire selon l'une quelconque des revendications précédentes, **caractérisé en ce que**
la caractéristique de rayonnement de luminaire (200) présente un maximum local (101, 102) à la première, deuxième, troisième et quatrième position de longueur d'onde et présente en particulier un minimum local entre deux positions de longueur d'onde voisines.

6. Luminaire selon l'une quelconque des revendications précédentes, **caractérisé en ce que**
la caractéristique de rayonnement de luminaire (200) reproduit une courbe de sensibilité visuelle de dichromates qui présente un premier maximum local (101) à une première longueur d'onde et un deuxième maximum local (102) à une deuxième longueur d'onde et qui présente exactement un minimum local entre les deux maxima locaux (101, 102), en particulier la courbe de sensibilité visuelle (100) des porcs, **en ce que** la première position de longueur d'onde a une longueur d'onde plus grande que le minimum local et les deuxième, troisième et quatrième positions de longueur d'onde ont une longueur d'onde plus petite que le minimum local, la troisième position de longueur d'onde étant plus proche du deuxième maximum local (102) que les deuxième et quatrième positions de longueur d'onde, le rapport entre les premier et deuxième maxima locaux (101, 102) étant notamment compris entre 0,3 fois et 3 fois le rapport entre le premier et le deuxième maximum d'intensité (1, 2).

7. Luminaire selon l'une quelconque des revendications précédentes, **caractérisé en ce que**,
dans l'état de fonctionnement, la caractéristique de rayonnement de luminaire (200) présente une courbe d'intensité dépendant de la longueur d'onde, dont l'intégrale sur la longueur d'onde est une intensité totale de la caractéristique de rayonnement de luminaire (200), au moins 60 %, en particulier au moins 70 %, de l'intensité totale se situe dans la plage comprise entre 500 nm et 650 nm et au moins 15 %, en particulier au moins 20 %, de l'intensité totale se situe dans la plage comprise entre 350 nm et 499 nm, et entre 1 % et 10 % se situe au-dessus de 650 nm, en particulier 2 % à 15 % de l'intensité totale se situe entre 350 nm et 420 nm et 10 % à 30 % se situe entre 421 nm et 499 nm.

8. Luminaire selon l'une quelconque des revendications précédentes, **caractérisé en ce que**
le luminaire comprend un premier sous-ensemble de sources lumineuses et un second sous-ensemble de sources lumineuses, chacun des sous-ensembles de sources lumineuses ayant une caractéristique de rayonnement d'une longueur d'onde moyenne, la longueur d'onde moyenne du premier sous-ensemble de sources lumineuses étant inférieure d'au moins 70 nm à la longueur d'onde moyenne du second sous-ensemble de sources lumineuses, le dispositif de commande étant conçu pour commander les sources lumineuses du luminaire dans un état de fonctionnement de culture défini et, en variante, dans un état de fonctionnement d'inspection, dans l'état de fonctionnement de culture, les sources lumineuses sont commandées par le dispositif de commande de sorte que moins de 1 % d'une intensité totale de la caractéristique de rayonnement de luminaire (200) est générée par la deuxième sous-ensemble de sources lumineuses et, dans l'état de fonctionnement d'inspection, les sources lumineuses sont commandées par le dispositif de commande de sorte qu'au moins 5 %, en particulier au moins 10 % de l'intensité totale de la caractéristique de rayonnement de luminaire (400) est générée par la deuxième sous-ensemble de sources lumineuses.

9. Luminaire selon la revendication 8,
**caractérisé en ce que**
le luminaire comprend un cinquième groupe de sources lumineuses présentant une caractéristique de rayonnement avec un cinquième maximum d'intensité (5) situé à une cinquième position de longueur d'onde entre 590 nm et 660 nm, la cinquième position de longueur d'onde étant située à une longueur d'onde plus longue que la première position de longueur d'onde, le premier sous-ensemble de sources lumineuses comprenant les premier, deuxième, troisième et quatrième groupes de sources lumineuses et le deuxième sous-ensemble de sources lumineuses comprenant le cinquième groupe de sources lumineuses.

10. Luminaire selon l'une quelconque des revendications 8 ou 9,
**caractérisé en ce que**
le luminaire comprend un capteur de détection de présence, le dispositif de commande étant conçue pour passer de l'état de fonctionnement de culture à l'état de fonctionnement d'inspection en cas de détection d'une présence, l'état de fonctionnement d'inspection se distinguant notamment de l'état de fonctionnement de culture par le fait que le deuxième sous-ensemble de sources lumineuses est alimenté en énergie pour émettre de la lumière, luminaire présentant en particulier un élément de commande central qui est raccordé à une entrée de commande du dispositif de commande et par l'intermédiaire duquel la caractéristique de rayonnement de luminaire (400) peut être réglée dans l'état de fonctionnement de culture et dans l'état de fonctionnement d'inspection et/ou par l'intermédiaire duquel une mise en marche et une mise à l'arrêt du luminaire peuvent être effectuées, le dispositif de commande étant conçue pour, indépendamment
de l'élément de commande, alterner entre l'état de fonctionnement de culture et l'état de fonctionnement d'inspection par un signal reçu du capteur de détection de présence.

11. Luminaire selon l'une quelconque des revendications 8 à 10,
**caractérisé en ce que**,
dans l'état de fonctionnement de culture, la caractéristique de rayonnement de luminaire (200, 400) présente une couleur de lumière totale d'ondes plus courtes que dans l'état de fonctionnement d'inspection, en particulier parmi l'état de fonctionnement de culture et l'état de fonctionnement d'inspection, seul l'état de fonctionnement d'inspection assure un éclairage d'un local conformément à la directive sur les lieux de travail.

12. Luminaire selon l'une quelconque des revendications précédentes,
**caractérisé en ce que**
les sources lumineuses des différents groupes de sources lumineuses sont disposées sur une platine commune ou un support de platine commun, le dispositif de commande commandant tous les groupes de sources lumineuses par l'intermédiaire de lignes de commande fixées à la platine commune ou au support de platine commun.

13. Luminaire selon l'une quelconque des revendications précédentes,
**caractérisé en ce que**
le luminaire comprend un dispositif optique, toutes les sources lumineuses étant disposées par rapport au dispositif optique de telle sorte qu'elles émettent de la lumière dans le dispositif optique lorsque l'alimentation en énergie est commandée par le dispositif de commande, le dispositif optique étant conçu pour mélanger la lumière émise par toutes les sources lumineuses et pour émettre une lumière mixte du luminaire avec laquelle le luminaire émet de la lumière avec la caractéristique de rayonnement de luminaire (200, 400) .

14. Luminaire selon l'une quelconque des revendications précédentes, **caractérisé en ce que**
le luminaire présente un boîtier de luminaire dans lequel sont intégrées toutes les sources lumineuses du luminaire et en particulier le dispositif optique et/ou en particulier le dispositif de commande.

15. Procédé d'éclairage d'installations d'élevage avec une caractéristique de rayonnement de luminaire (200, 400), dans lequel des sources lumineuses d'un premier groupe de sources lumineuses, qui présente une caractéristique de rayonnement avec un premier maximum d'intensité (1) situé à une première position de longueur d'onde entre 510 nm et 650 nm, et d'un deuxième groupe de sources lumineuses qui présente une caractéristique de rayonnement avec un deuxième maximum d'intensité (2) situé à une deuxième position de longueur d'onde entre 451 nm et 500 nm, et d'un troisième groupe de sources lumineuses qui présente une caractéristique de rayonnement avec un troisième maximum d'intensité (3) situé à une troisième position de longueur d'onde entre 420 nm et 450 nm, et un quatrième groupe de sources lumineuses qui présente une caractéristique de rayonnement avec un quatrième maximum d'intensité (4) situé à une quatrième position de longueur d'onde entre 300 nm et 420 nm, en particulier entre 360 nm et 410 nm, de telle sorte que le troisième maximum d'intensité (3) est plus grand que le deuxième maximum d'intensité (2) et que le troisième maximum d'intensité (3) est que le quatrième maximum d'intensité (4), et
**caractérisé en ce que**
le premier maximum d'intensité (1) est plus grand que le troisième maximum d'intensité (3).

16. Procédé selon la revendication 15,
**caractérisé en ce que**
des sources lumineuses d'un premier sous-ensemble de sources lumineuses et d'un deuxième sous-ensemble de sources lumineuses, qui présentent chacune une caractéristique de rayonnement avec une longueur d'onde moyenne, la longueur d'onde moyenne du premier sous-ensemble de sources lumineuses étant inférieure d'au moins 70 nm à la longueur d'onde moyenne du deuxième sous-ensemble de sources lumineuses,
sont commandées en sélectionnant un mode de fonctionnement de culture défini ou un mode de fonctionnement d'inspection défini, dans lequel, dans le mode de fonctionnement de culture, les sources lumineuses sont commandées de telle manière que moins de 1 % d'une intensité totale de la caractéristique de rayonnement de luminaire (200) est générée par le deuxième sous-ensemble de sources lumineuses, et dans l'état de fonctionnement d'inspection, les sources lumineuses sont commandées de telle manière qu'au moins 5 %, en particulier au moins 10 % de l'intensité totale de la caractéristique de rayonnement de luminaire (400) sont générés par le deuxième sous-ensembles de sources lumineuses.
